(19) Europäisches Patentamt
European Patent Office
Office européen des brevets

(11) EP 4 414 745 A1

(12) EUROPEAN PATENT APPLICATION

(43) Date of publication:
14.08.2024 Bulletin 2024/33

(51) International Patent Classification (IPC):
G01S 13/76 (2006.01)        G01S 13/02 (2006.01)

(21) Application number: 23155294.4

(52) Cooperative Patent Classification (CPC):
G01S 13/0209; G01S 13/765

(22) Date of filing: 07.02.2023

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Bayerische Motoren Werke
Aktiengesellschaft
80809 München (DE)

(72) Inventors:
• Kuelzer, Daniel
  80799 München (DE)
• Knott, Thorsten
  83104 Tuntenhausen (DE)

(54) **METHODS FOR IMPROVING AN ULTRA-WIDEBAND RANGING SESSION, APPARATUS, VEHICLE AND COMPUTER PROGRAM**

(57) Embodiments relate to a method 100 for improving an ultra-wideband ranging session. The method 100 comprises obtaining 110 an initialization parameter for the ultra-wideband ranging session. Further, the method 100 comprises determining 120, based on the initialization parameter, a start time parameter indicative of a start time of the ultra-wide band ranging session. Further, the method 100 comprises transmitting 130, to a communication device, a start signal indicative of the start time parameter.

Fig. 1

EP 4 414 745 A1

**Description**

The present disclosure relates to the field of ultra-wideband (UWB) ranging session. Embodiments relate to a method for improving a UWB ranging session (also referred to as ranging sessi on), an apparatus, a vehicle and a computer program.

Known user equipment use fixed UWB start time for ranging session setup, e.g., to establish a ranging session with another communication device, such as a communication device part of a vehicle. The Car Connectivity Consortium Digital Key Release 3, Technical Specification Version 1.0.11 (CCC-TS-101) [1] defines in Section 19.3.1.6 Ranging Session Setup Response (RSS-RS) in Table 19-28: "Definition of the parameters for Ranging_Session_Setup_RS" an UWB start time, referred to as UWB_Time0, as "Starting time reference (resolution 1 microsecond) on UWB Device Clock of ranging session (see Section 20.3)." However, this UWB_Time0 may cause performance issues for different ranging session setups. Thus, there may be a need to improve an ultra-wideband ranging session.

It is therefore a finding that an ultra-wide band ranging session can be improved by determining a start time parameter and transmitting the start time parameter to a communication device. By transmitting the start time parameter to the communication device, the communication device can be informed about the start time of the ranging session of the user equipment. In this way, the communication device can adjust start of its ranging session to a start of the ranging session of the user equipment. Thus, a delay caused by a missed (first) pre-poll can be avoided.

Examples provide a method for improving an ultra-wideband ranging session. The method comprises obtaining an initialization parameter for the ultra-wideband ranging session. Further, the method comprises determining, based on the initialization parameter, a start time parameter indicative of a start time of the ultra-wide band ranging session. Further, the method comprises transmitting, to a communication device, a start signal indicative of the start time parameter. By transmitting the start signal to the communication device, the communication device can synchronize its ranging session to the ranging session of the user equipment. In this way, both the communication device and the user equipment can start the ranging session simultaneously. Thus, the ranging session can be improved, since the communication device can start its own ranging session at an advantageously time.

In an example, obtaining the initialization parameter may comprise receiving a configuration signal from the communication device indicative of a configuration time for the ultra-wide band ranging session of the communication device. In this way, the user equipment can consider a time needed by the communication device to start the ranging session. For example, the communication device may need different times to setup a new ranging session or to recover a ranging session used before. Thus, the user equipment can consider the configuration time of the communication device to setup or recover a ranging session to determine the start time parameter. In this way, it can be ensured that the user equipment does not start with the ranging session before the communication device is ready to start the ranging session too.

In an example, obtaining the initialization parameter may comprise determining a processing time of the start signal. For example, the transmission of the start signal may be delayed due to internal communication processes of the user equipment. This internal delay duration may be a time until a Ranging Session Setup Response or Ranging Recovery Response message (that may comprise or may be identical to the start signal indicative of the start time parameter) is forwarded to the BLE chip of the user equipment. In this way, a timing of the start of the ranging session between the communication device and the user equipment can be improved.

In an example, obtaining the initialization parameter may comprise determining a transmission success rate of the start signal and determining the initialization parameter based on the transmission success rate. In this way, a drop rate of BLE packages can be considered. For example, if the likelihood that a BLE package is not received by the communication device exceeds a certain threshold, then the start time parameter may be determined based on the assumption that two transmissions of a BLE package are necessary to transmit the start signal to the communication device.

Examples provide a method for improving an ultra-wideband ranging session. The method comprises determining an initialization parameter for the ultra-wideband ranging session. Further, the method comprises transmitting, to user equipment, a configuration signal indicative of the initialization parameter. Further, the method comprises receiving, from the user equipment, a start time parameter indicative of a start time of the ultra-wideband ranging session and starting the ultra-wideband ranging session based on the start time parameter. In this way, the communication device can synchronize a start of a ranging session with the user equipment.

In an example, the initialization parameter may depend on an initial setup of an ultra-wideband ranging session or a recovery of an ultra-wideband ranging session. In this way, a specific characteristic of an ultra-wideband ranging session, e.g., a configuration time, can be considered. Thus, a synchronization for starting a ranging session between the communication device and the user equipment can be improved.

In an example, starting the ultra-wideband ranging session may comprise determining a starting time of the ultra-wideband ranging session based on the start time parameter. In this way, the communication device can determine the information to start a ranging session to avoid delays in the communication with the user equipment in an improved way.

Examples relate to an apparatus, comprising interface circuitry configured to communicate with a communication device and/or user equipment and processing circuitry configured to perform a method as described above. Examples relate to a vehicle, comprising an apparatus as described above.

Examples further relate to a computer program having a program code for performing the method described above, when the computer program is executed on a computer, a processor, or a programmable hardware component.

Some examples of apparatuses, methods and/or computer programs will be described in the following by way of example only, and with reference to the accompanying figures, in which

Fig. 1 shows an example of a method for user equipment;

Fig. 2 shows an example of a method for a communication device; and

Fig. 3 shows a block diagram of an example of an apparatus, e.g., for a vehicle.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes", or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

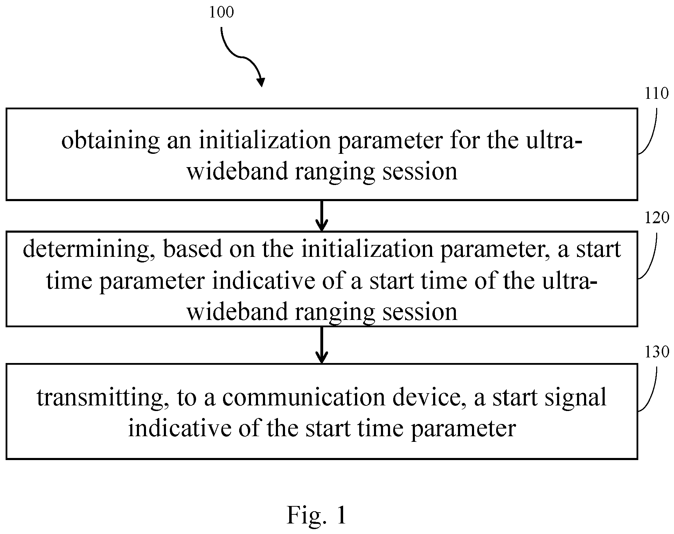

Fig. 1 shows an example of a method 100 for user equipment. The method 100 may be performed by user equipment. The method 100 comprises obtaining 110 an initialization parameter for the ultra-wideband ranging session. The initialization parameter may be indicative of a parameter of a ranging session. For example, the initialization parameter may be indicative of a configuration time of the communication device. This configuration time of the communication device may be a time needed to configure the communication device for a ranging session. The time to configure the communication device for a ranging session may depend on the type of the ranging session, such as a setup of a ranging session or a recovery of the ranging session. For example, the initialization parameter may be indicative of a time delay caused by the user equipment, e.g., caused by an internal communication delay with a BLE chip of the user equipment.

Further, the method 100 comprises determining 120 a start time parameter indicative of a start time of the ultra-wide band ranging session. The start time parameter is determined based on the initialization parameter. For example, the start time parameter may be indicative of or may be the UWB start time, UWB-Time0. The start time parameter may be a (global) time determined by the user equipment, for example. The communication device may be informed about the (global) time, such that the communication device can start its ranging session based on the (global) time. The (global) time may be a time, which can be used to synchronize the user equipment and the communication device. Alternatively, start time parameter may be indicative of a delay to start the ranging session at the communication device and/or at the user equipment.

Further, the method 100 comprises transmitting 130 a start signal indicative of the start time parameter. The start signal is transmitted 130 to a communication device. The communication device may be a receiver of a vehicle, for example.

By transmitting the start signal to the communication device, the communication device can synchronize its ranging session to the ranging session of the user equipment. In this way, both the communication device and the user equipment can start the ranging session simultaneously.

According to [1], for every ranging session, an initiator (normally the user equipment) and a responder (normally the vehicle, e.g., a communication device of the vehicle) negotiate the ranging parameters (also referred to as handshake in [1]). The handshake is performed based on the BLE communication link between the user equipment and the communication device. The initiator transmits a UWB_Time0 that lets the responders know, how long it will wait before it starts ranging. The ranging may start with a Pre-Poll, a first ranging round, which has always a hopping offset 0. This may start of a ranging block which sends a Pre-Poll. The UWB_Time0 is provided to the responders in the Ranging Session Setup Response or Ranging Recovery Response message. If the UWB_Time0 is too low, the responders will miss the First Pre-Poll and/or a Pre-Poll of frame index 0 and respectively the whole ranging round for frame index 0. If the first Pre-poll is missed due to an out-of-band time synchronization, the receiver may not have accurate information about the time of arrival of the first frame. The hopping offset of the first frame would depend on the particular implementation of the UWB system, including the channel hopping sequence and the timing parameters used.

For example, with out-of-band time synchronization, and given a sufficient UWB_time0, the receiver can receive frame index 1. In a worst-case scenario, this frame index has a hopping offset of 11, hence, given a RAN_multiplier of 3 the added delay is 552 ms.

By obtaining the initialization parameter and determining the start time parameter an adaptive setting of the start time of the ranging session can be achieved. In this way, the likelihood the responder may miss the First Pre-Poll and/or a Pre-Poll of frame index 0 is decreased or a miss can be even avoided. Thus, the ranging session can be improved. For example, the start time parameter may be different for different required configurations of the communication device, such as configuration needed for Ranging Session Setup or Ranging Session Recovery.

Note, even if the above description describes the problem with respect to the First Pre-Poll and/or the Pre-Poll the same problem arises for the Poll and can be solved by method 100. For example, utilizing a time synchronization it is in principle possible to perform a successful ranging session, even if the First Pre-Poll and/or Pre-Poll was missed. However, it is not possible to perform a successful ranging session based on time synchronization if the Poll was missed. Therefore, the Poll may be even more critical for a successful ranging session. Thus, the start signal can be used by the communication to synchronize the Poll of the ranging session.

In an example, obtaining the initialization parameter may comprise receiving a configuration signal from the communication device indicative of a configuration time for the ultra-wideband ranging session of the communication device. In this way, the user equipment can be informed by the communication device about a time needed to configure the communication device for starting the ranging session. For example, the configuration signal may be indicative or may comprise the initialization parameter.

For example, there may be a protocol change, e.g., in [1], by redefining or adjusting the handshake. The handshake may be redefined/adjusted, such that a time the communication device (the responder in the handshake) needs to configure is considered. For example, in the handshake a configuration signal may be integrated. The configuration signal may be indicative of the configuration time, which may take a fixed time of the communication device. Only an over-the-air update may be used to adjust the fixed time. The configuration time is different for a Ranging Session Setup and a Ranging Session Recovery. Therefore, during the handshake (comprising negotiation of ranging parameters), the communication device shall inform the user equipment about its capabilities, e.g., about the configuration time. Thus, the user equipment may receive the configuration signal from the communication device. The configuration signal may comprise an information about a minimum time needed to setup a ranging session (e.g., min_UWB_Time0_Responder_Setup) or a minimum time needed to recover a previously used ranging session (min_UWB_Time0_Responder_Recovery).

In an example, obtaining the initialization parameter may comprise determining a processing time of the start signal. The user equipment may have its own processing time. The processing time may depend on a communication time between the processing circuitry (e.g., for determining the start time parameter) of the user equipment and a BLE chip of the user equipment comprising an interface circuitry to transmit the start signal, for example. For example, a parameter Initiator_Transmisson_Delay_UWB_Time0 may be defined for the processing time. For example, the start signal may be part of or may be a Ranging Session Setup Response or Ranging Recovery Response message (that comprises the start time parameter, e.g., UWB_Time0). The processing time may be the duration until the start signal is forwarded from the processing circuitry to the BLE chip of the user equipment.

In an example, obtaining the initialization parameter may comprise determining a transmission success rate of the start signal and determining the initialization parameter based on the transmission success rate. A transmission success rate may be indicative of success of a transmission from the user equipment to the communication device. For example, the transmission success rate may indicate a likelihood of a successful reception of the start signal at the communication device.

The BLE connection has the following attributes for performing the handshake and may have the following parameters:

- BLE_Connection_Interval: Typically 30 ms for use case corresponding to [1]. Due to power optimization, it can be in the order of 120 ms in some scenarios.
- BLE_Number_of_Retries: In case of interference, the first transmission might not be successfully received at the responder. Then the message is sent again (and BLE_Number_of_Retries = 1). This may affect the transmission success rate. The parameter BLE_Number_of_Retries can be modeled to take into account the transmission success rate.

For example, the parameter BLE_Number_of_Retries can be determined based on previous BLE communication links between the user equipment and the communication, e.g., by channel sensing, by measuring a signal to noise ratio. Alternatively or additionally, the parameter BLE_Number_of_Retries can be determined based on other BLE communication links.

Further, for the BLE connection or in advance to starting the ranging session an out-of-band time synchronization may be performed. In this way, the initiator time of the BLE connection is 0, Initiator_Time = 0. The UWB_time0 corresponds to the time of the time synchronization X defined by the initiator (normally the user equipment). Thus, the UWB_time0 = X + 250ms.

Note the out-of-band time synchronization is not mandatory for the vehicle. For example, a vehicle comprising the communication device may configure the vehicle anchors, when receiving the Ranging Session Resume/Setup message. Thus, the vehicle may set the vehicle anchors to continuous receive. Then it is especially important that the difference between the Initiator_Time and the UEB_time0 is not smaller than this setup process of the user.

The user equipment determines 120 the start time parameter, such that the start time parameter may depend on at least one of the above discussed parameters. For example, the user equipment may set the start time parameter, e.g., UWB_time0, based on the following formulas:

For a Ranging Session Setup:

$$UWB\_Time0 >= Initiator\_Transmisson\_Delay\_UWB\_Time0 + BLE\_Connection\_Interval *$$
$$(1 + E[BLE\_Number\_of\_Retries]) + min\_UWB\_Time0\_Responder\_Setup + Initiator\_Time$$

For a Ranging Session Recovery:

$$UWB\_Time0 >= Initiator\_Transmisson\_Delay\_UWB\_Time0 + BLE\_Connection\_Interval *$$
$$(1 + E[BLE\_Number\_of\_Retries]) + min\_UWB\_Time0\_Responder\_Resume + Initiator\_Time$$

In this way, needed parameters for determining the start time parameter can be taken into account. Thus, the ranging session can be improved. Note, as described above the Initiator_Time may be 0 if an out-of-band time synchronization was done by the user equipment and the communication device.

In general, the communication device and/or the user equipment may be a device that is capable of communicating wirelessly. In particular, however, the user equipment may be a mobile user equipment, e.g., user equipment that is suitable for being carried around by a user. For example, the user equipment may be a user terminal or user equipment within the meaning of the respective communication standards being used for mobile communication. For example, the user equipment may be a mobile phone, such as a smartphone, or another type of mobile communication device, such as a smartwatch, a laptop computer, a tablet computer, or autonomous augmented-reality glasses.

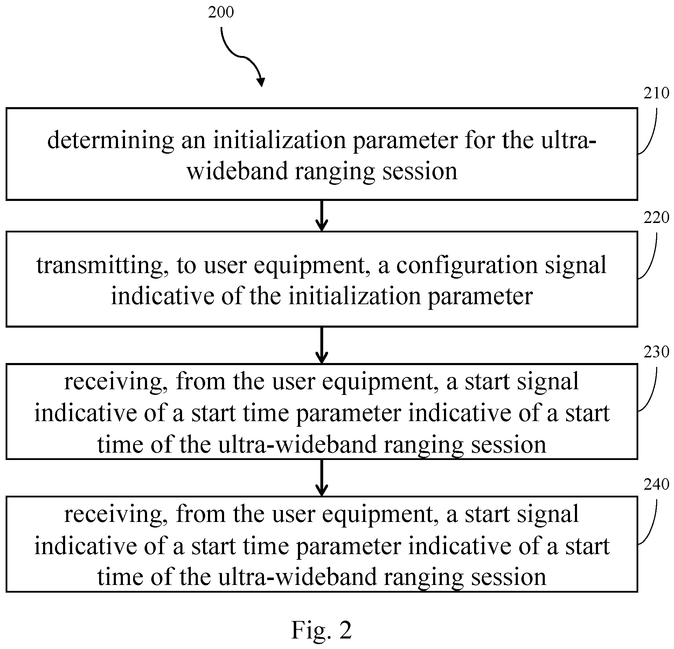

More details and aspects are mentioned in connection with the embodiments described below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200 for improving an ultra-wideband ranging session. The method 200 may be performed by the communication device, e.g., a communication device part of a vehicle. The communication device may be a counterpart of user equipment, e.g., user equipment configured to perform a method as described with reference to Fig. 1.

The method 200 comprises determining 210 an initialization parameter for the ultra-wideband ranging session. The initialization parameter may be indicative of the configuration time of the communication device. As described above the communication device may need different configuration times for different ranging sessions. For example, a configuration time to setup ranging session may be different to a configuration time to recover a ranging session.

Further, the method 200 comprises transmitting 220 a configuration signal indicative of the initialization parameter. The configuration signal is transmitted to user equipment. Further, the method 200 comprises receiving 230 a start signal indicative of the start time parameter. The start time parameter is indicative of a start time of the ultra-wideband ranging session. The start time signal is received from the user equipment.

Further, the method 200 comprises starting 240 the ultra-wideband ranging session based on the start time parameter. In this way, the communication device can synchronize a start of a ranging session with the user equipment.

In an example, the initialization parameter may depend on an initial setup of an ultra-wideband ranging session or a recovery of an ultra-wideband ranging session. In this way, a specific characteristic of an ultra-wide band ranging session, e.g., a configuration time, can be considered.

In an example, starting the ultra-wideband ranging session may comprise determining a starting time of the ultra-wideband ranging session based on the start time parameter. For example, the communication device may rely on the start time parameter to configure an interface circuitry of its own for the ranging session. For example, if the start time parameter is not known to the communication device, the communication device may be not able to perform a configuration for starting a ranging session. In this way, it can be ensured that the communication device is only configured for the ranging session if information needed for configuration (such as the start time parameter) is available. Therefore, the BLE connection interval and the expected number of retransmissions can be also taken into account for configuring the communication device.

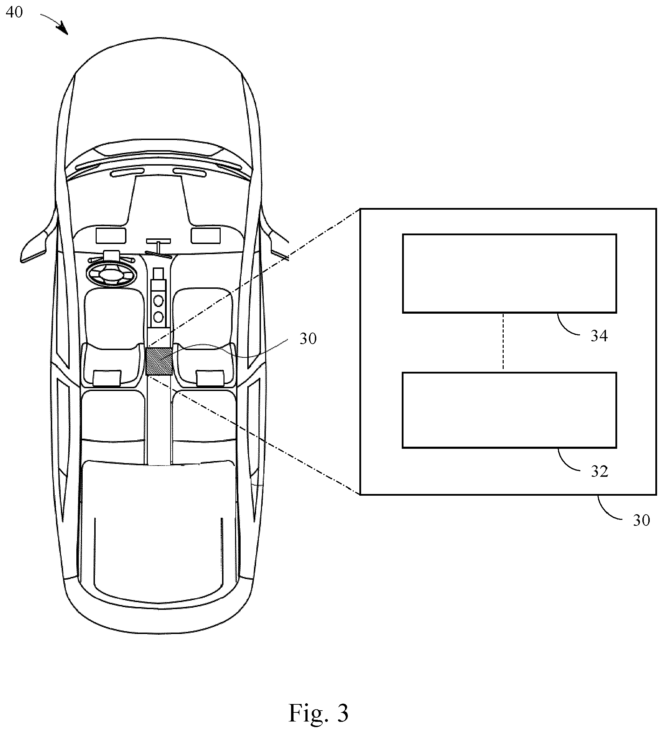

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 4).

Fig. 3 shows a block diagram of an example of an apparatus 30 for a vehicle 40. The apparatus 30 comprises interface circuitry 32 configured to communicate with a communication device or user equipment and processing circuitry 34 configured to perform a method as described above, e.g., the method for user equipment as described with reference to Fig. 1 or the method for a communication device as described with reference to Fig. 2. For example, the apparatus 30 may be part of the vehicle 40, e.g., part of a control unit of the vehicle 40. For example, the communication device as described with reference to Fig. 2 and the apparatus 30 may be part of by the same vehicle 40 or may be identical.

For example, the vehicle 40 may be a land vehicle, such a road vehicle, a car, an automobile, an offroad vehicle, a motor vehicle, a bus, a robo-taxi, a van, a truck or a lorry. Alternatively, the vehicle 40 may be any other type of vehicle, such as a train, a subway train, a boat or a ship. For example, the proposed concept may be applied to public transportation (trains, bus) and future means of mobility (e.g., robo-taxis).

As shown in Fig. 3 the respective interface circuitry 32 is coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface circuitry 32, so that any data transfer that occurs over the interface circuitry 32 and/or any interaction in which the interface circuitry 32 may be involved may be controlled by the processing circuitry 34.

In an embodiment the apparatus 30 may comprise a memory and at least one processing circuitry 34 operably coupled to the memory and configured to perform the method described above.

In examples the interface circuitry 32 may correspond to any means for obtaining, receiving, transmitting or providing analog or digital signals or information, e.g., any connector, contact, pin, register, input port, output port, conductor, lane, etc. which allows providing or obtaining a signal or information. The interface circuitry 32 may be wireless or wireline and it may be configured to communicate, e.g., transmit or receive signals, information with further internal or external components.

The apparatus 30 may be a computer, processor, control unit, (field) programmable logic array ((F)PLA), (field) programmable gate array ((F)PGA), graphics processor unit (GPU), application-specific integrated circuit (ASICs), integrated circuits (IC) or system-on-a-chip (SoCs) system.

More details and aspects are mentioned in connection with the embodiments described. The example shown in Fig. 3 may comprise one or more optional additional features corresponding to one or more aspects mentioned in connection with the proposed concept or one or more examples described above (e.g., Fig. 1 - 2).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

The aspects and features described in relation to a particular one of the previous examples may also be combined with one or more of the further examples to replace an identical or similar feature of that further example or to additionally introduce the features into the further example.

## References

30 apparatus
32 processing circuitry
34 interface circuitry
40 vehicle
100 method for improving an ultra-wideband ranging session
110 obtaining an initialization parameter
120 determining a start time parameter
130 transmitting a start signal
200 method for improving an ultra-wideband ranging session
210 determining an initialization parameter for the ultra-wideband ranging session
220 transmitting a configuration signal indicative of the initialization parameter
230 receiving a start signal indicative
240 starting the ultra-wideband ranging session

## Claims

1. A method (100) for improving an ultra-wideband ranging session, comprising:

   obtaining (110) an initialization parameter for the ultra-wideband ranging session;
   determining (120), based on the initialization parameter, a start time parameter indicative of a start time of the ultra-wideband ranging session; and
   transmitting (130), to a communication device, a start signal indicative of the start time parameter.

**2.** The method (100) according to claim 1, wherein
obtaining the initialization parameter comprises receiving a configuration signal from the communication device indicative of a configuration time of the communication device for the ultra-wide band ranging session.

**3.** The method (100) according to any one of the preceding claims, wherein
obtaining the initialization parameter comprises determining a processing time of the start signal.

**4.** The method (100) according to any one of the preceding claims, wherein
obtaining the initialization parameter comprises:

determining a transmission success rate of the start signal; and
determining the initialization parameter based on the transmission success rate.

**5.** A method (200) for improving an ultra-wideband ranging session, comprising:

determining (210) an initialization parameter for the ultra-wideband ranging session;
transmitting (220), to user equipment, a configuration signal indicative of the initialization parameter;
receiving (230), from the user equipment, a start signal indicative of a start time parameter indicative of a start time of the ultra-wideband ranging session; and
starting (240) the ultra-wideband ranging session based on the start time parameter.

**6.** The method (200) according to claim 5, wherein
the initialization parameter depends on an initial setup of an ultra-wideband ranging session or a recovery of an ultra-wideband ranging session.

**7.** The method (200) according to claim 5 or 6, wherein
starting the ultra-wideband ranging session comprises determining a starting time of the ultra-wideband ranging session based on the start time parameter.

**8.** An apparatus (30), comprising:

interface circuitry (32) configured to communicate with at least one of a communication device or user equipment; and
processing circuitry (34) configured to perform a method according to any of the preceding claims.

**9.** A vehicle (40) comprising the apparatus (30) according to claim 8.

**10.** A computer program having a program code for performing the method (100; 200) according to claim 1 - 8, when the computer program is executed on a computer, a processor, or a programmable hardware component.

obtaining an initialization parameter for the ultra-wideband ranging session — 110

determining, based on the initialization parameter, a start time parameter indicative of a start time of the ultra-wideband ranging session — 120

transmitting, to a communication device, a start signal indicative of the start time parameter — 130

Fig. 1

200

| determining an initialization parameter for the ultra-wideband ranging session | 210 |

| transmitting, to user equipment, a configuration signal indicative of the initialization parameter | 220 |

| receiving, from the user equipment, a start signal indicative of a start time parameter indicative of a start time of the ultra-wideband ranging session | 230 |

| receiving, from the user equipment, a start signal indicative of a start time parameter indicative of a start time of the ultra-wideband ranging session | 240 |

Fig. 2

Fig. 3

Europäisches
Patentamt

European
Patent Office

Office européen
des brevets

# EUROPEAN SEARCH REPORT

Application Number

**EP 23 15 5294**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/099643 A1 (GOLSCH KYLE [US] ET AL) 12 April 2018 (2018-04-12) * abstract; figure 22 * * paragraphs [0002], [0007], [0065], [0098], [0192], [0193] * | 1-4,8-10 | INV. G01S13/76 G01S13/02 |
| X | US 2021/400441 A1 (BUROWSKI YAGIL [US] ET AL) 23 December 2021 (2021-12-23) * abstract; figures 8-9 * * paragraphs [0035], [0039], [0099], [0110], [0115] – [0125], [0132], [0139] * | 5-8,10 | |

TECHNICAL FIELDS
SEARCHED        (IPC)

**G01S**

The present search report has been drawn up for all claims

| Place of search | Date of completion of the search | Examiner |
|---|---|---|
| Munich | 17 July 2023 | Lupo, Emanuela |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.......................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 15 5294

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2023

| Patent document cited in search report | | Publication date | Patent family member(s) | | Publication date |
|---|---|---|---|---|---|
| US 2018099643 | A1 | 12-04-2018 | CN | 109844822 A | 04-06-2019 |
| | | | EP | 3526777 A2 | 21-08-2019 |
| | | | US | 2018099643 A1 | 12-04-2018 |
| | | | US | 2019263356 A1 | 29-08-2019 |
| | | | US | 2020247363 A1 | 06-08-2020 |
| | | | US | 2021245707 A1 | 12-08-2021 |
| | | | WO | 2018071671 A2 | 19-04-2018 |
| US 2021400441 | A1 | 23-12-2021 | AU | 2021293921 A1 | 02-02-2023 |
| | | | CN | 113825256 A | 21-12-2021 |
| | | | CN | 116367096 A | 30-06-2023 |
| | | | EP | 3927037 A1 | 22-12-2021 |
| | | | KR | 20230010748 A | 19-01-2023 |
| | | | US | 11082809 B1 | 03-08-2021 |
| | | | US | 2021400441 A1 | 23-12-2021 |
| | | | WO | 2021257720 A1 | 23-12-2021 |

EPO FORM P0459

For more details about this annex : see Official Journal of the European Patent Office, No. 12/82